# EUROPÄISCHE PATENTANMELDUNG

(11) **EP 4 609 975 A1**
(43) Veröffentlichungstag der Anmeldung: **03.09.2025**
(21) Anmeldenummer: 24160598.9
(22) Anmeldetag: 29.02.2024
(51) Int. Cl.: B23C 5/28, B23B 51/06

(54) **ZYLINDERFÖRMIGER SINTERROHLING FÜR EIN GEWENDELTES ZERSPANUNGSWERKZEUG MIT MINDESTENS EINER SCHNEIDE**

(71) Anmelder: Gühring KG, 72458 Albstadt (DE)
(72) Erfinder: Kade, Boris, 13127 Berlin (DE); Naumann, Norman, 16727 Felten (DE); Quitsch, Thorsten, 13089 Berlin (DE)
(74) Vertreter: Winter, Brandl - Partnerschaft mbB

(57) **Zusammenfassung**

Zylinderförmiger Sinterrohling 1 für ein gewendeltes Zerspanungswerkzeug 10 mit mindestens einer Schneide, wobei der Sinterrohling 1 in seinem Inneren verlaufend einen geradlinigen Spülkanal 2 und mindestens einen gewendelten Kühlkanal 3 umfasst, wobei der Spülkanal 2 zentral entlang der Längsachse des Sinterrohlings 1 verläuft und wobei der mindestens eine gewendelte Kühlkanal 3 um den Spülkanal 2 gewendelt angeordnet ist.

## Beschreibung

Die Erfindung betrifft einen zylinderförmigen Sinterrohling für ein gewendeltes Zerspanungswerkzeug mit mindestens einer Schneide.

Zu Zerspanungswerkzeugen gehören beispielsweise Bohrer oder Fräser. Diese werden üblicherweise aus einem Sinterrohling hergestellt. Dabei ist es technisch vorteilhaft den Sinterrohling mit Kühl- oder Spülkanälen zu versehen, welche im späteren Werkzeug dazu genutzt werden, Fluide durch die Kanäle zu der Werkzeugspitze oder den Werkzeugflanken zu fördern.

Die Förderung von Fluiden durch die Kanäle führt dazu, dass die Reibung zwischen den Schneiden des Zerspanungswerkzeugs und dem bearbeiteten Material verringert und das Werkzeug gekühlt wird. Das vermindert den Verschleiß des Werkzeugs. Fluide können außerdem dazu verwendet werden, um abgetragenes Material abzuführen. Dabei sind verschiedene Ausführungsformen der Kühl- oder Spülkanäle verbreitet.

Eine gängige Ausführung zeigt gewendelte Kanäle, welche dezentral liegen und sich wie eine Spirale um die zentrale Längsachse des Zerspanungswerkzeugs wendeln. Diese Kanäle haben den Vorteil, dass bei mehrschneidigen Zerspanungswerkzeugen zu jeder Schneide ein eigener Kanal führen kann, sodass die einzelnen Schneiden ausreichend gekühlt bzw. geschmiert werden können und abgetragenes Material von den Schneiden wegtransportiert wird. Allerdings haben sie aufgrund ihres Austrittspunkts außerhalb der zentralen Achse den Nachteil, dass das abgetragene Material nicht nur nach außen gespült werden kann, sondern auch zu der zentralen Achse des Werkzeugs hin. So kann sich gerade bei einem mehrschneidigen Werkzeug das Material in der Mitte ansammeln und dabei die Zerspanungswirkung verschlechtern und zu erhöhtem Verschleiß des Werkzeugs führen.

Es ist die Aufgabe der Erfindung die Nachteile des Stands der Technik zu überwinden und insbesondere einen Sinterrohling bereitzustellen, dessen Kühl- und/oder Spülkanäle derart ausgeführt sind, sodass sich bei Verwendung des daraus hergestellten Werkzeugs das Spülen von Material zur zentralen Längsachse des Werkzeugs verringert.

Diese Aufgabe wird durch einen zylinderförmigen Sinterrohling für ein gewendeltes Zerspanungswerkzeug mit mindestens einer Schneide gemäß dem unabhängigen Anspruch gelöst. Vorteilhafte Ausgestaltungen bilden den Gegenstand der jeweiligen Ansprüche.

Die Erfindung umfasst einen zylinderförmigen Sinterrohling für ein gewendeltes Zerspanungswerkzeug mit mindestens einer Schneide. Dieser Sinterrohling umfasst in seinem Inneren verlaufend einen geradlinigen Spülkanal und mindestens einen gewendelten Kühlkanal, wobei der Spülkanal zentral entlang der Längsachse des Sinterrohlings verläuft und der mindestens eine gewendelte Kühlkanal sich um den Spülkanal windet. Durch den zentral verlaufenden Spülmittelkanal kann ein Fluid geleitet werden, durch welches eine Strömung vom Zentrum des späteren Zerspanungswerkzeugs weg bewirkt wird. Diese Strömung verhindert, dass Material vom Fluid aus den dezentralen Kühlkanälen in Richtung zur zentralen Längsachse des Werkzeugs gespült wird. Stattdessen wird die Abfuhr des Materials nach außen gefördert.

Technisch bevorzugt erstrecken sich der Spülkanal und der zumindest eine Kühlkanal über die volle Länge des Sinterrohlings und gehen nicht ineinander über. Somit kann in den Spül- und Kühlkanälen verschiedene Fluide in unterschiedlicher Menge oder Druck befördert werden, um die Materialabfuhr und Kühlung zu optimieren.

Gemäß eines technischen Aspekts vollzieht der zumindest eine Kühlkanal mindestens eine halbe Windung um den Spülkanal. Die Windungszahl der Kühlkanäle folgt aus ihrem Drallwinkel und der Länge des Sinterrohlings.

Vorteilhafterweise weist der Spülkanal einen Durchmesser Dₛ im Bereich von 1,10 mm bis 1,50 mm auf. Der Durchmesser richtet sich aus gewünschtem Fluiddurchsatz und -druck sowie den Dimensionen des Sinterrohlings.

Bevorzugt weist der zumindest eine Kühlkanal einen Durchmesser Dₖ im Bereich von 0,20 mm bis 0,70 mm auf. Die Kühlkanäle liegen unter den Schneiden und zwischen Nuträumen. Der Durchmesser Dₖ kann daher nicht beliebig groß gewählt werden, da der Sinterrohling sonst instabil werden kann.

Vorteilhafterweise ist der Durchmesser Dₛ größer als der Durchmesser Dₖ. Dadurch ist es einfacher einen höheren Fluiddurchsatz durch den Spülkanal als durch die Kühlkanäle zu erhalten. Bei einem höheren Fluiddurchsatz ist die Strömung vom Spülkanal ausgehend größer, wodurch die Abfuhr nach außen stärker ausgebildet ist.

Bevorzugt ist der Sinterrohling ein geschliffener Sinterrohling und umfasst mindestens eine radial verlaufende Nut, wobei jedem des mindestens einem Kühlkanals eine Nut zugeordnet ist. Die Anzahl der eingeschliffenen Nuts und der Kühlkanäle stimmen überein.

Gemäß eines technischen Aspekts weist der mindestens eine Kühlkanal einen Drallwinkel α auf, wobei 25 ° < α < 45 °. Die Spannuten und Stege des aus dem Sinterrohling gefertigten Zerspanungswerkzeug haben dabei jeweils denselben Drallwinkel wie der zugehörige Kühlkanal.

Bevorzugt verläuft der mindestens eine Kühlkanal auf einem zum zentralen Spülkanal konzentrischen Teilkreis, wobei der Teilkreis einen Durchmesser D_{TK} im Bereich von 3 mm bis 7 mm aufweist. Der Durchmesser des Teilkreises sollte dabei nicht zu groß gewählt werden, sodass die Gegenströmung vom Spülkanal ausgehend am Teilkreis noch stark genug ist und das abgetragene Material nach außen gespült wird.

Gemäß eines technischen Vorteils ist der Sinterrohling aus einem Hartmetall, insbesondere einem Carbid-Hartmetall gefertigt. Hartmetalle weißen eine hohe Härte und Verschleißfähigkeit auf, sodass es trotz den Kanälen durch den Sinterrohling beziehungsweise durch das Zerspanungswerkzeug beständig ist. Die Erfindung betrifft insbesondere ein Zerspanungswerkzeug, dass aus dem hier beschriebenen Sinterrohling hergestellt wurde, wie zum Beispiel einen 4 Schneider.

Ein weiterer Aspekt der Erfindung umfasst ein Verfahren zur Herstellung eines gewendelten Zerspanungswerkzeugs mit mindestens einer Schneide umfassend der Schritte Bereitstellung eines Sinterrohlings und der Herstellung mindestens einer Schneide. Die Bereitstellung des Sinterrohlings wie oben beschrieben erfolgt unter anderem durch Pressen. Dabei wird der Spülkanal bevorzugt geradlinig und entlang der zentralen Längsachse L des Sinterrohlings und der mindestens eine Kühlkanal mit einem Drallwinkel α ausgebildet. Anschließend erfolgt das Schleifen mindestens einer Nut in den Sinterrohling. Schließlich wird in den Sinterrohling die mindestens eine Schneide geschliffen. Diese ist derart angeordnet, sodass der mindestens eine Kühlkanal im Inneren des Sinterrohlings entlang dieser Schneide und zwischen den Spannuten verläuft.

Bevorzugt umfasst die Erfindung ein Verfahren zur Herstellung eines gewendelten Zerspanungswerkzeugs mit vier Schneiden umfassend der Schritte Bereitstellung eines Sinterrohlings und der Herstellung von vier Schneiden. Die Bereitstellung des Sinterrohlings wie oben beschrieben erfolgt unter anderem durch Pressen, insbesondere Stangenpressen. Dabei wird der Spülkanal im Wesentlichen geradlinig und entlang der zentralen Längsachse L des Sinterrohlings und vier Kühlkanäle mit einem Drallwinkel α ausgebildet. Anschließend erfolgt das Schleifen von vier Nuts in den Sinterrohling. Schließlich werden in den Sinterrohling vier Schneiden geschliffen. Diese sind derart angeordnet, sodass die vier Kühlkanäle im Inneren des Sinterrohlings entlang der jeweiligen Schneide und zwischen den Spannuten verläuft. Bei dem durch dieses Verfahren gefertigte vierschneidige Zerspanungswerkzeug ist somit die Abfuhr des abgetragenen Materials verbessert. Das führt zu einer sauberen und verschleißarmen Zerspanung.

Im Folgenden wird die Erfindung anhand eines in den beigefügten Zeichnungen dargestellten Beispiels näher erläutert.

Es zeigen:
- Fig. 1: schematische Darstellung eines erfindungsgemäßen zylinderförmigen Sinterrohlings;
- Fig. 2: Sicht auf die Stirnseite mit Nuts des zylinderförmigen Sinterrohlings;
- Fig. 3: Längsansicht des erfindungsgemäßen zylinderförmigen Sinterrohlings; und
- Fig. 4: Sicht auf die Stirnseite eines aus dem Sinterrohling gefertigten Zerspanungswerkzeugs.

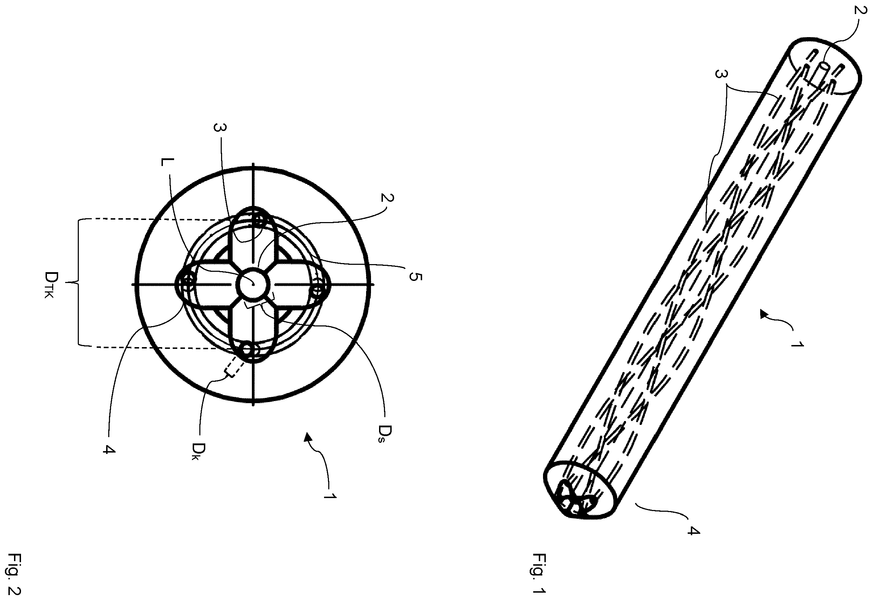

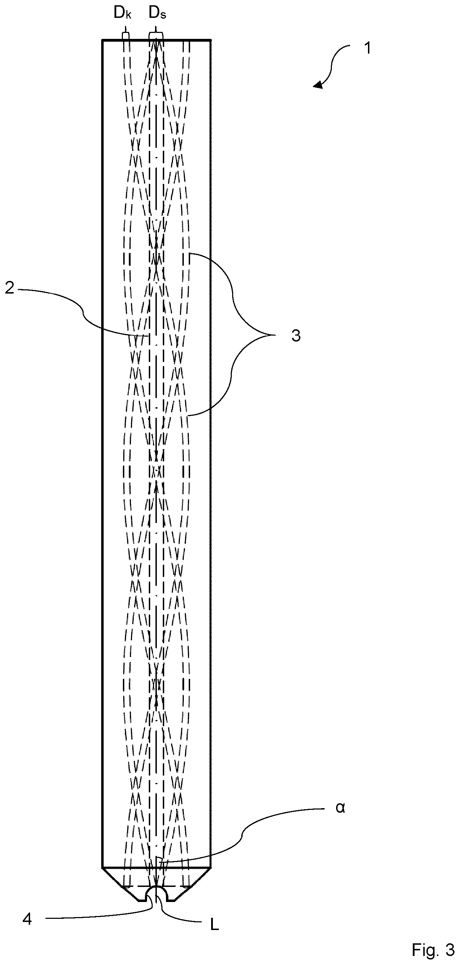

In **Fig. 1** ist ein erfindungsgemäßer zylinderförmiger Sinterrohling 1 dargestellt. Gestrichelt sind der Spülkanal 2 und vier Kühlkanäle 3 dargestellt, welche im Inneren des Sinterrohlings 1 verlaufen. Der Spülkanal 2 verläuft dabei entlang der zentralen Längsachse L, welche in dieser Figur nicht eingezeichnet ist. Ersichtlich ist dies vor allem in Fig. 3. Der Spülkanal 2 verläuft vom Mittelpunkt der einen Stirnseite zum Mittelpunkt der zweiten Stirnseite. Um den Spülkanal 2 winden sich spiralförmig die vier Kühlkanäle 3. Auch diese erstrecken sich entlang der gesamten Länge des Sinterrohlings 1. Der Spülkanal 2 und die Kühlkanäle 3 berühren, verzweigen oder vereinigen sich dabei nicht. In der hier dargestellten Darstellung vollziehen die Kühlkanäle 3 je eine dreiviertel Windung um den Kühlkanal.

An einer Stirnseite des zylinderförmigen Sinterrohlings sind Nuts 4 geschliffen. Eine Draufsicht auf diese Stirnseite ist in **Fig. 2** gezeigt. Die vier eingeschliffenen Nuten 4 sind radial wie ein Kreuz um die Austrittsstelle des Spülkanals 2 an der Stirnseite angeordnet und berühren sich dabei im Mittelpunkt der Stirnfläche und des Spülkanals 2, in welchem die Längsachse L die Stirnfläche schneidet.

Weiter außen treten die Kühlkanäle 3 aus der Stirnfläche aus. Die Austrittsstellen befinden sich dabei noch innerhalb (zwischen) je einer der Nuten 4. Zudem haben in diesem Ausführungsbeispiel alle Austrittsstellen der Kühlkanäle 3 denselben Abstand zur Längsachse L und befinden sich auf einem mit dem Spülkanal 2 konzentrischen Teilkreis des Durchmessers D_{TK}, welcher je nach Ausführung von 3 mm bis 7 mm reicht. In dieser Darstellung ist außerdem der Durchmesser Dₛ des Spülkanals 2 und der Durchmesser Dₖ der Kühlkanäle 3 ersichtlich. In dieser Ausführung ist der Durchmesser Dₖ aller vier Kühlkanäle 3 gleich groß. Der Durchmesser Dₛ ist dabei größer als der Durchmesser Dₖ. Dₛ beträgt sich zwischen 1,10 mm und 1,50 mm, Dₖ zwischen 0,20 mm und 0,70 mm. Wie in den Fig. 1 und 3 ersichtlich sind die Durchmesser Dₛ und Dₖ über die Länge des Sinterrohlings 1 konstant.

**Fig. 3** zeigt eine Längsansicht des erfindungsgemäßen Sinterrohlings 1. In dieser Ansicht ist der Drall der gewendelten Kühlkanäle 3 ersichtlich. Der Drallwinkel α liegt im Bereich von 25 ° und 45 °. In dem hier dargestellten Ausführungsbeispiel vollführen die Kühlkanäle 3 eine volle Windung um den Spülkanal 2. Die Figur zeigt außerdem, dass die Stirnseite mit den Nuts 4 als Kegelstumpf ausgebildet ist, in welchen die Nuts 4 eingeschliffen wurden.

Die Ausführungsbeispiele des Sinterrohlings 1 aus den Figuren 1 bis 3 sind aus einem Hartmetall gefertigt.

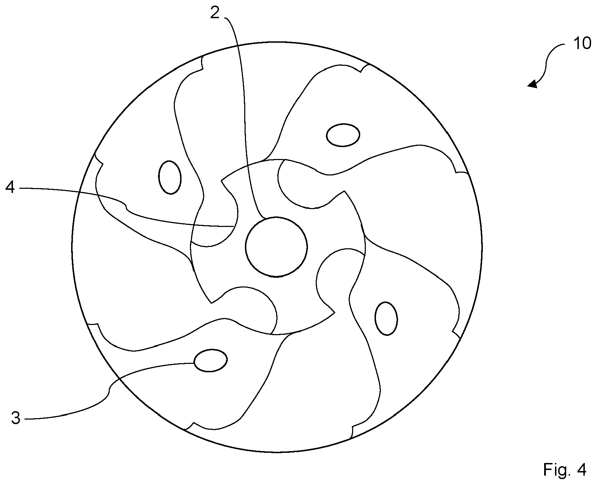

In **Fig. 4** ist die Stirnseite eines beispielhaften vierschneidigen Zerspanungswerkzeugs 10, welches aus einem erfindungsgemäßen Sinterrohling 1 gefertigt wurde, dargestellt. Das Zerspanungswerkzeug 10 besitzt vier Klingen, wobei an jeder Stirnseite einer Schneide ein Kühlkanal 3 austritt. Im Zentrum des Zerspanungswerkzeug befindet sich die Austrittsstelle des Spülkanals 2. Ersichtlich sind außerdem die Nuts 4, welche sich je mit einer Austrittsstelle eines Kühlkanals 3 auf einer Radiallinie befinden.

## Patentansprüche

1. Zylinderförmiger Sinterrohling (1) für ein gewendeltes Zerspanungswerkzeug (10) mit mindestens einer Schneide, wobei der Sinterrohling (1) in seinem Inneren verlaufend einen geradlinigen Spülkanal (2) und mindestens einen gewendelten Kühlkanal (3) umfasst, wobei der Spülkanal (2) zentral entlang der Längsachse des Sinterrohlings (1) verläuft und wobei der mindestens eine gewendelte Kühlkanal (3) um den Spülkanal (2) gewendelt angeordnet ist.

2. Sinterrohling (1) nach einem der vorangegangenen Ansprüche, wobei der Spülkanal (2) und der zumindest eine Kühlkanal (3)derart ausgebildet sind, sodass sie sich über die volle Länge des Sinterrohlings (1) erstrecken und nicht ineinander übergehen.

3. Sinterrohling (1) nach einem der vorangegangenen Ansprüche, wobei der zumindest eine Kühlkanal (3) mindestens eine halbe Windung um den Spülkanal (2) vollzieht.

4. Sinterrohling (1) nach einem der vorangegangenen Ansprüche, wobei der Spülkanal (2) einen Durchmesser Dₛ im Bereich von 1,10 mm bis 1,50 mm aufweist.

5. Sinterrohling (1) nach einem der vorangegangenen Ansprüche, wobei der zumindest eine Kühlkanal (3) einen Durchmesser Dₖ im Bereich von 0,20 mm bis 0,70 mm aufweist.

6. Sinterrohling (1) nach Anspruch 4 und 5, wobei Dₛ > Dₖ.

7. Sinterrohling (1) nach einem der vorangegangenen Ansprüche, wobei der Sinterrohling (1) ein geschliffener Sinterrohling ist und mindestens eine radial verlaufende Nut (4) umfasst, wobei jedem des mindestens einem Kühlkanals (3) eine Nut (4) zugeordnet ist.

8. Sinterrohling (1) nach einem der vorangegangenen Ansprüche, wobei der mindestens eine Kühlkanal (3) einen Drallwinkel α aufweist, wobei 25 ° < α < 45 °.

9. Sinterrohling (1) nach einem der vorangegangenen Ansprüche, wobei der mindestens eine Kühlkanal (3) auf einem zum zentralen Spülkanal (2) konzentrischen Teilkreis (5) verläuft, wobei der Teilkreis einen Durchmesser D_{TK} im Bereich von 3 mm bis 7 mm aufweist.

10. Sinterrohling (1) nach einem der vorangegangenen Ansprüche, wobei der Sinterrohling (1) aus einem Hartmetall, insbesondere einem Carbid-Hartmetall gefertigt ist.

11. Verfahren zur Herstellung eines gewendelten Zerspanungswerkzeugs (10) mit mindestens einer Schneide umfassend der Schritte
- Bereitstellung eines Sinterrohlings (1) gemäß einem der Ansprüche 1 bis 11 unter anderem durch Pressen, insbesondere Stangenpressen, wobei der Spülkanal (2) im Wesentlichen geradlinig und entlang der zentralen Längsachse L des Sinterrohlings (1) und der mindestens eine Kühlkanal (3) mit einem Drallwinkel α ausgebildet wird und Schleifen mindestens einer Nut (4) in den Sinterrohling (1); und
- Herstellung mindestens einer Schneide, welche derart angeordnet ist, sodass der mindestens eine Kühlkanal (3) im Inneren des Sinterrohlings (1) entlang dieser Schneide verläuft.

12. Verfahren zur Herstellung eines gewendelten Zerspanungswerkzeugs (10) mit vier Schneiden umfassend der Schritte
- Bereitstellung eines Sinterrohlings (1) gemäß einem der Ansprüche 1 bis 11 unter anderem durch Pressen, insbesondere Stangenpressen wobei der Spülkanal (2) im Wesentlichen geradlinig und entlang der zentralen Längsachse L des Sinterrohlings (1) und vier Kühlkanäle (3) mit einem Drallwinkel α ausgebildet wird und Schleifen von vier Nuts (4) in den Sinterrohling (1); und
- Herstellung von vier Schneiden, welche derart angeordnet sind, sodass die vier Kühlkanäle (3) im Inneren des Sinterrohlings (1) entlang je einer der vier Schneiden verlaufen.
